# EUROPEAN PATENT SPECIFICATION

(11) **EP 3 243 002 B1**
(45) Date of publication and mention of the grant of the patent: **01.05.2019**
(21) Application number: 15706292.8
(22) Date of filing: 12.01.2015
(51) Int. Cl.: F03D 3/00, F03D 3/04

(54) **REGULATABLE AIR-FLOW ACCELERATION UNIT FOR WIND ENERGY CONVERSION EQUIPMENT**
REGULIERBARE LUFTFLUSSBESCHLEUNIGUNGSEINHEIT FÜR WINDENERGIEUMWANDLUNGSANLAGE
UNITÉ D'ACCÉLÉRATION DE L'ÉCOULEMENT DE L'AIR POUVANT ÊTRE RÉGULÉ POUR ÉQUIPEMENT DE CONVERSION D'ÉNERGIE ÉOLIENNE

(30) Priority: 05.01.2015 HU P1500003
(43) Date of publication of application: 15.11.2017
(73) Proprietor: Havas, Gábor, 1027 Budapest (HU)
(72) Inventor: HAVAS, Eszter, 1027 Budapest (HU); HAVAS, Gáborné, 1027 Pilisszentkereszt (HU)
(74) Representative: Ronaszéki, Tibor
(86) International application number: PCT/HU2015/000001
(87) International publication number: WO 2016/110722

(56) References cited:
- WO-A2-2008/016584
- DE-A1- 2 732 192
- FR-A1- 2 432 102
- US-A- 648 442
- US-A- 4 127 356
- US-A- 5 009 569

## Description

The subject of the invention relates to a regulatable air-flow acceleration unit for wind energy conversion equipment which has a wind acceleration channel enclosed by a casing with an inlet opening and an outlet opening, where the casing has an upper delimiting - member, a lower delimiting member and at least two side delimiting members, furthermore the casing is supplemented with at least two pressure-limiting devices, at least some of the pressure-limiting devices have a regulation valve, the regulation valve has a tilting body and a rotation axle connected to the tilting body in such a way as to permit rotation, and the rotation axle is located near to the upper delimiting member of the casing, or near to the lower delimiting member of the casing, or in the plane of the upper delimiting member or in the plane of the lower delimiting member, and is connected to the casing so that it may tilt in this way, furthermore, the upper delimiting member or the lower delimiting member of the casing is supplied with a transmission passage in the vicinity of the rotation axle, and in its basic position the tilting body, the tilting body is inserted into the casing so that it at least partially covers the transmission passage, while in its operation position of the tilting body, the tilting body is set to the turned out position from the plane of the upper delimiting member or from the plane of the lower delimiting member of the casing around its own rotation axle, and the wind acceleration channel encompassed by the casing has a cross-section that monotonously reduces from the direction of the inlet opening towards the outlet opening.

The demand for the utilisation of alternative energy sources is becoming important for an increasing wider sphere. These include the application of the various wind power plants and wind turbines for the production of electricity. A good example of this is the solution presented in patent application number HU P 07 00369, which uses the so-called Banki-type turbine arrangement, as a result of which it is able to get wind with a continuous speed value to the turbine blades without the housing being rotated.

Patent application number HU P 08 00069 presents a wind energy utilisation device the casing of which is supplemented with deflector wings, furthermore, it has electronic elements providing the appropriate control, and along the edge of the casing there is a leakage band created as a diffuser.

Two wind speed regulation circuits operating on the basis of different operating principles are included in the solution according to patent application number HU P 12 00001, but in the given construction only one emergency back-regulation circuit has been created, in which the emergency back-regulation element was inserted in the constructed channelled wind speed increasing circuit as a direct flap element and not as a real valve.

A further disadvantage of this solution is that with its very expensive and complex solution, its price is not competitive with other electricity generating equipment operated with alternative energy sources.

Another disadvantage is that the operation reliability of the simple flap plate emergency back-regulator does not reach the desired level.

With the exception of the solution included in patent application number HU P 12 00001 the general deficiency of the known solutions is that they do not use the possibilities deriving from the laws of physics in order to optimally exploit the varying wind speed occurring in the environment. The basic problem is that in numerous geographical areas, for example in Hungary too, the wind conditions are characterised by fast and extensive wind speed fluctuations, beside which in many places the wind has a low intensity anyway, and even strong wind only occurs in gusts and periodically remaining at an extent so that it can be used for the production of electric energy.

Solutions are known of in the case of which control fittings have been installed in the housing to protect the turbines of wind power plants from overly strong gusts of wind. These control fittings essentially consist of transfer passages formed in the housing and flap bodies covering these. The flap bodies are retained in their default position covering the transfer passages of the housing by their own weight or by a spring. In the case of strong wind it is the strength of the wind itself that turns the flap bodies and opens the transfer passages so that a part of the air flowing into the housing is able to escape here. Such solutions are presented in, among others, patent specification registration number FR 2.432.102, registration number US 4.127.356, registration number US 5.009.569 and in publication document number WO2008/016584.

However, the disadvantage of these solutions is that the flap bodies are not suitable for creating proportional control, i.e. they do not open the transfer passages in proportion with the magnitude of the wind pressure, and so make it possible for a proportional amount of air to flow out.

Our objective with the solution according to the invention was to overcome the deficiencies of the known versions and to create a regulatable air-flow acceleration unit to be used for wind energy transformation devices that in the case of vertical axle wind turbines and even in the case of high wind speed fluctuation and high wind speed bandwidth is able to automatically adapt to the environmental conditions, make reliable operation possible even in the case of fast derived wind, and technically it should be possible to install one or more wind speed increasing circuits around vertical axle wind turbines and it should be able to direct wind gusting at a speed above 1 m/sec to the wind turbines irrespective of its direction so that the speed of the wind reaching the turbine blades is nearly constant, even if high-speed gusts of wind suddenly reach the inlet opening of the wind power plant.

Embodiments of the present invention are described below, but the invention is defined by the appended claims. The basic idea leading to the solution according the invention was that if we lead the environmental wind in a structural zone surrounding a vertical axle turbine known in itself through uniquely established structural elements so that when reaching the turbine blades it is in the most favourable speed range from the point of view of the production of electric energy, then essentially even energy production can be achieved with a favourable degree of energy transformation efficiency.

The recognition belonging to the basic idea was that the natural wind speed value of the wind arriving from the environment must be increased when entering the energy transformation device. This may take place by increasing the speed of hurricane-like wind only slightly and the speed of weak wind even as much as sixteen times, and the air-flow accelerated to the greater speed level achieved in this way must be maintained within appropriate limits, so that if necessary this increased air-flow must be efficiently and even significantly restricted so that it is unable to exert a damaging effect on the turbine blades or on the turbine itself.

This recognition also means that the increased speed wind cannot be only and exclusively used without appropriate regulation, because in a given case expressly damaging levels of wind speed must be reduced, but even then only to the extent so that the speed of the wind used for the production of electricity is maintained at a level close to the theoretical performance limit as compared to the possibilities provided by the device. These requirements, however, may only be realised with a multi regulatory circuit system, where the individual regulatory circuits enter into operation in the case the given conditions occur.

Therefore, the invention is based, on the one part, on the recognition that if first of all we lead the environmental wind into a uniquely constructed wind acceleration channel in which pressure-limiting devices that operate in an unusual way have been arranged in a novel way one after the other, even on two sides, above and below in the wind acceleration channel, and so in this way a wind acceleration channel is created that has a variable degree of restriction, then with this solution that deviates from those known of it becomes possible to automatically regulate the wind flow without any other supplementary equipment being necessary by directly using the dynamic pressure of the wind, and in this way a large-scale, even ten-fold or more, speed increase may be achieved without operation risks, as a consequence of which the task may be solved.

On the other part, the recognition also includes that if at the regulation valve of the pressure-limiting device the rotation axis of the tilting body is located unusually, essentially in the direction according to the wind flow - i.e. in the radial direction in the case of air-flow acceleration units arranged in a circular cylinder section shape used in the case of vertical axle turbines - then much smoother and finer regulation may be realised during the movement of the tilting bodies, which makes it even easier to solve the task.

In the case of the arrangement according to the invention the given degree of displacement of the compressive force reception members installed in the path of the wind flow directly and automatically adjusts the tilting bodies of the regulation valve as a regulation unit. In this way when the wind is permitted onto the blades of the rotating axle of the turbine through the wind acceleration channel with a variable degree of restriction, then a mass of air arrives onto the blades that has a well-regulated speed and energy potential, which falls in the optimal range from the point of view of electric energy generation, and in this way energy generation may be performed within the desired framework, i.e. the regulation task becomes solvable even on the output side.

In accordance with the set aim regulatable air-flow acceleration unit for wind energy conversion equipment according to the invention -which has a wind acceleration channel enclosed by a casing with an inlet opening and an outlet opening, where the casing has an upper delimiting member, a lower delimiting member and at least two side delimiting members, furthermore the casing is supplemented with at least two pressure-limiting devices, at least some of the pressure-limiting devices have a regulation valve, the regulation valve has a tilting body and a rotation axle connected to the tilting body in such a way as to permit rotation, and the rotation axle is located near to the upper delimiting member of the casing, or near to the lower delimiting member of the casing, or in the plane of the upper delimiting member or in the plane of the lower delimiting member, and is connected to the casing so that it may tilt in this way, furthermore, the upper delimiting member or the lower delimiting member of the casing is supplied with a transmission passage in the vicinity of the rotation axle, and in its basic position the tilting body, the tilting body is inserted into the casing so that it at least partially covers the transmission passage, while in its operation position of the tilting body, the tilting body is set to the turned out position from the plane of the upper delimiting member or from the plane of the lower delimiting member of the casing around its own rotation axle, and the wind acceleration channel encompassed by the casing has a cross-section that monotonously reduces from the direction of the inlet opening towards the outlet opening- is set up in such a way that at least some of the pressure-limiting devices have a compressive force reception member protruding into the wind acceleration channel, an axle connected to the compressive force reception member permitting rotation, and a multi-member drive part-unit connected to the compressive force reception member and the tilting body of the regulation valve is connected to the drive part-unit the rotation axle of tilting body is at an angle to the longitudinal main axis of the casing that deviates from the perpendicular, which direction of the rotation axle is essentially equal with the direction of wind in the wind acceleration channel, and the tilting body is in its operation position, the tilting body is tilted out from the plane of the upper delimiting member or from the plane of the lower delimiting member of the casing around its own rotation axle with the help of the drive part-unit in proportion to the rotation of the compressive force reception member.

A further feature of the regulatable air-flow acceleration unit according to the invention may be that the wind acceleration channel encompassed by the casing has a circular cylinder-ring section shape.

In the case of another embodiment of the regulatable air-flow acceleration unit the tilting body has a size and a shape that conforms to the size and the shape of the transmission passage.

In the case of another different embodiment of the invention the rotation axle of the tilting body of the regulation valve is located in a longitudinal plane of the casing that is not the longitudinal main plane of the casing.

In the case of yet another different embodiment of the regulatable air-flow acceleration unit the rotation axle of the tilting body of the regulation valve is located parallel to the plane of the upper delimiting member of the casing or parallel to the plane of the lower delimiting member of the casing.

In the case of another different embodiment of the invention the pressure-limiting devices are arranged in the casing sequentially from the inlet opening of the wind acceleration channel towards the outlet opening and/or the pressure-limiting devices are arranged in the vicinity of both the upper delimiting member and the lower delimiting member of the casing and/or the pressure-limiting devices are arranged next to one another in the vicinity of the upper delimiting member of the casing and/or in the vicinity of the lower delimiting member of the casing.

The air-flow acceleration unit according to the invention has numerous advantageous characteristics. The most important of these is that due to the multiple circuit acceleration and wind speed regulation units the wind energy conversion equipment connected to the air-flow acceleration unit according to the invention is much less sensitive to the direction and speed of the environmental wind than the known constructions, and therefore even in wind conditions involving a fluctuation of direction and wind speeds that quickly vary between wide limits the turbine supplied by it is suitable for efficiently and smoothly generating electricity.

It is an advantage that due to the novel structure and operation of the pressure-limiting devices and regulation valves located even in more than two circuits, the wind energy conversion equipment fitted with the air-flow acceleration units according to the invention may even be effectively operated in continental climate regions with poor wind characteristics. As the wind acceleration channel, due to the band-arranged pressure-limiting devices realising appropriate regulation may be a geometrically formed narrowing that is able to accelerate even weak wind to the appropriate speed, but it is also able to reduce the speed of sudden, very strong wind gusts to the extent that these extreme effects do not appear on the turbine blades to an extent that represents a disadvantage from the point of view of electricity generation.

It is also an advantage that it has a simple structure, and so it may be easily manufactured under favourable cost conditions, and it may also be simply and quickly installed.

It is also an advantage that due to the multi-circuit acceleration system the connected wind energy conversion device does not suffer damage even in the case of significant gusts or hurricane-force wind in the case of the use of now easily provided structural elements manufactured at the appropriate technological standard, especially if the ratio of the height and diameter of the casing of the equipment assembled from the air-flow acceleration units does not fall under 1:2. But even in the lack of this ratio being maintained, with external strengthening, including tensioning ties and supporting poles, etc. the static stability may be maintained.

Another thing that may be mentioned among the advantages is that due to the simple structure, installation and operation it may be applied to good effect for local electric networks, to satisfy local energy demand, and, therefore, may be used extensively, as in the nearly up to 20 KWh performance range even on a weekly average it is almost able to produce electric energy almost continuously.

An important advantage is that due to the structure and arrangement of the wind acceleration channel and the pressure-limiting device a significant incoming wind speed increase may be achieved in a regulated way with which at the given moment the wind energy conversion equipment may be operated to much greater effect than the possibilities provided by the current wind conditions occurring in its immediate vicinity.

It is also an advantage that in the case of the solution according to the invention the Bernoulli Effect may be utilised well, and so it is able to achieve a wind speed increase even greater than ten times, which was not possible to realise in the case of traditional wind energy conversion equipment. Also this may result in a significant increase of the specific efficiency and performance of wind energy conversion equipment equipped with the air-flow acceleration units according to the invention.

It may also be seen as an advantage that due to its simple structure and good installation characteristics the air-flow acceleration unit according to the invention may be fitted to the known vertical axle wind energy conversion devices, and so their performance may also be increased with a favourable cost investment.

In the following the air-flow acceleration unit according to the invention is presented in more detail in connection with a construction example with the help of drawings. In the drawings
Figure 1 shows the side view of the air-flow acceleration unit according to the invention in partial cross-section,
Figure 2 shows the cross-section of the air-flow acceleration unit according to figure 1 taken along the plane marked II-II,
Figure 3 shows the view of the air-flow acceleration unit according to figure 2 from the direction III,
Figure 4 is a view picture of a version of the wind energy conversion equipment equipped with the air-flow acceleration units according to the invention.

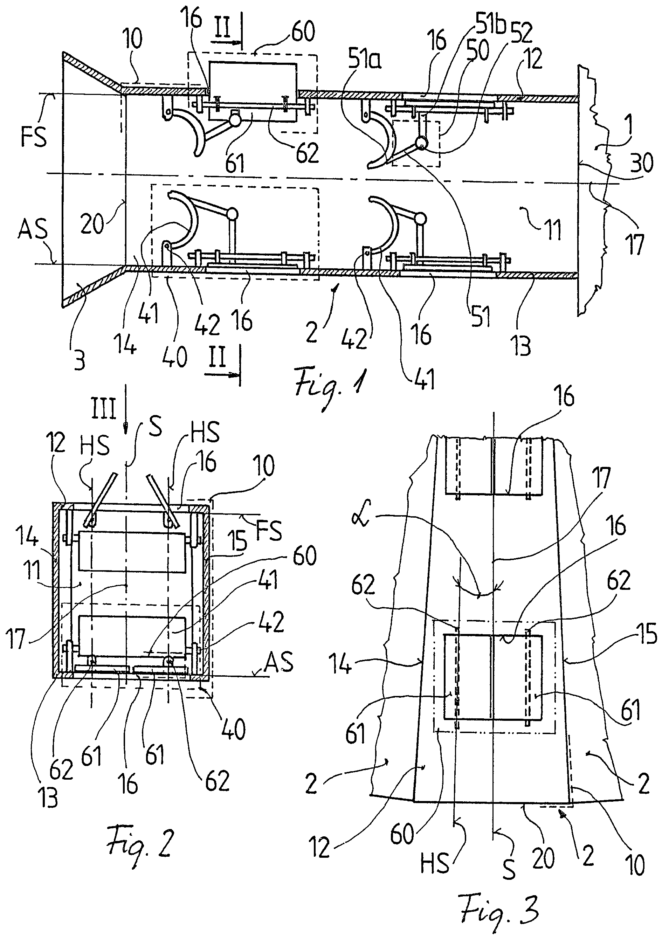

In figures 1-3 a version of the air-flow acceleration unit 2 according to the invention may be seen that may be used to good effect with wind energy conversion equipment 1 containing a vertical axle turbine. It may be observed that located before the inlet opening 20 of the casing 10 of the air-flow acceleration unit 2 there is a wind speed increasing guiding element 3 that serves to more effectively receive and preliminarily accelerate the currently blowing wind. Also the outlet opening 30 of the casing 10 is connected to the wind energy conversion equipment 1 in the usual way and so is not detailed here.

The casing 10 of the air-flow acceleration unit 2 is assembled from the upper delimiting member 12, the lower delimiting member 13, the first side delimiting member 14 and the second side delimiting member 15 and encompasses the wind acceleration channel 11. The cross-section of the casing 10 - as may be easily observed in figure 2 - has a rectangular shape, which rectangular-shaped cross-section have a monotonously reducing area progressing from the inlet opening 20 in the direction of the outlet opening 30. In this case the wind acceleration channel 11 of the casing 10 has a circular cylinder ring section shape, which is illustrated in figure 3 as well. As the distance between the side delimiting member 14 and the side delimiting member 15 is the greatest at the inlet opening 20, and along the main axis 17 moving away from the inlet opening 20 - in the present embodiment - it reduces continuously.

Figure 3 also illustrates well that there are more transmission passages 16 created in the upper delimiting member 12 of the casing 10 of the air-flow acceleration unit 2. What is more, in the given embodiment - as shown in figure 1 - transmission passages 16 are created not only in the upper delimiting member 12 of the casing 10 but also in the lower delimiting member 13 as well. The pressure-limiting devices 40 are located in the vicinity of the transmission passages 16, which pressure-limiting devices 40 all include a compressive force reception member 41 and an axle 42 operating with it, and also the drive part-unit 50 and the regulation valve 60.

The axle 42 of the pressure-limiting device 40 is fixed to the casing 10, and the compressive force reception member 41 is able to rotate around this axle 42. The axle 42 is positioned in the wind acceleration channel 11 of the casing 10 so that it is perpendicular to the main axis 17 of the casing 10. In this arrangement the wind arriving from the inlet opening 20 of the wind acceleration channel 11 strikes the entire surface of the compressive force reception member 41, and so it is able to exert the greatest force onto the compressive force reception member 41 in the interest of rotating it around the axle 42 from the wind acceleration channel 11 in the direction of the upper delimiting member 12 or the lower delimiting member 13.

The regulation valve 60 has a tilting body 61 and a rotation axle 62, and here the rotation axle 62 - as opposed to the axle 42 - is fixed to the casing 10 so that its direction falls into one of the vertical longitudinal planes "HS" of the casing 10. However, this longitudinal plane "HS" does not contain the main axis 17 of the casing 10, and so it does in the vertical longitudinal main plane "S" of the air-flow acceleration unit 2. Therefore, it may also be seen on the basis of figure 3 that the rotation axle 62 of the regulation valve 60 in every case is at a relatively small sharp angle of inclination "α" to the vertical longitudinal main plane "S" of the air-flow acceleration unit 2 and to the main axis 17 of the casing 10 as well. In the case of a cylindrical ring section-like air-flow acceleration unit 2 arrangement it may be said that the position of the rotation axle 62 of the regulation valves 60 is radial.

The tilting bodies 61 of the regulation valve 60 are connected to the rotation axle 62 so that they may rotate, and in their basic position they are sheets positioned in parallel to the plane "FS" of the upper delimiting member 12 or to the plane "AS" of the lower delimiting member 13, the base and size of which sheets complies with the shape and size of the transmission passages 16 of the upper delimiting member 12 or of the lower delimiting member 13.

Naturally an arrangement may also be imagined in which the tilting bodies 61 are positioned in the plane "FS" of the upper delimiting member 12 or in the plane "AS" of the lower delimiting member 13.

In the case of the present embodiment each transmission passage 16 is covered by two identically sized tilting bodies 61. This is advantageous because in this way the regulation of the wind speed may be performed under more favourable flow conditions. Here more transmission passages 16 located behind each other, and so more pressure-limiting devices 40, are arranged in the upper delimiting member 12 and the lower delimiting member 13 of the casing 10. It is important that the air-flow acceleration unit 2 contains transmission passages 16 and pressure-limiting devices 40 in several rows. The greater the number of such arrangements the finer the automatic wind speed regulation of the air-flow acceleration unit 2 is.

Here it must be noted that several independent air-flow acceleration units 2 behind one another may be linked to each other, in which even just one transmission passage 16 and associated pressure-limiting device 40 is located. At this time, however, the entire wind channel is formed jointly by the wind acceleration channels 11 of the casings 10 of the air-flow acceleration units 2 assembled as a continuation of each other, in which there are now several transmission passages 16 and pressure-limiting devices 40 arranged one after the other.

It is also obvious that the air-flow acceleration units 2 may also be arranged in the shape of a cylindrical ring in such a way that the side delimiting member 14 of the one air-flow acceleration unit 2 comes into contact with the side delimiting member 15 of the neighbouring air-flow acceleration unit 2. What is more, in the case of a given arrangement the neighbouring air-flow acceleration units 2 may also have a common side delimiting member 14. The air-flow acceleration units 2 located next to one another may form a complete cylindrical ring, but an arrangement may also be imagined in the case of which just a 45°, 90°, 180° or even a 270° cylindrical ring section is created. This depends on whether there is a special wind direction or a dead zone from the point of view of wind that is preferable to take into consideration - for the purpose of reducing costs - when installing the wind energy conversion equipment 1.

A drive part-unit 50 creates the motion transfer connection between the compressive force reception member 41 and a tilting body 61. In the case of this version the drive part-unit 50 consists of a motion-transfer member 51 and a coupling member 52, and the first end 51a of the motion-transfer member 51 is connected to the compressive force reception member 41 while the second end 51b of the motion-transfer member 51 is connected to the tilting body 61. The task of the drive part-unit 50 is to tilt the tilting body 61 around the rotation axle 62 in a way proportional with the rotation of the compressive force reception member 41 around the axle 42.

It is also obvious that the task of the drive part-unit 50 can be realised not with just kinematic connections but also with the use of electronic elements, but taking into consideration cost-efficiency aspects a drive part-unit assembled from mechanical elements is by all means advantageous.

During the operation of the air-flow acceleration unit 2 according to the invention the wind arriving at the air-flow acceleration unit 2 approaches the inlet opening 20 of the casing 10 through the wind speed increasing guiding element 3, then through the inlet opening 20 it gets into the wind acceleration channel 11. If the speed of the wind is not too high then the compressive force reception members 41 of the pressure-limiting device 40 do not move from their hanging position in the wind acceleration channel 11. During the flow of the wind arriving in the wind acceleration channel 11 it progresses through an increasingly smaller cross-section, therefore its speed necessarily increases when progressing from the greater cross-sections of the inlet opening 20 towards the smaller cross-sections of the outlet opening 30. In the case that the accelerating air flow reaches a critical speed at a part of the wind acceleration channel 11 more distant from the inlet opening, and so its compressive force increases, then the compressive force exerted by the flowing air moves the inner compressive force reception member 41 of the pressure-limiting device 40 - viewing figure 1 - in the anticlockwise direction around the axle 42 in the case of the upper delimiting member 12 and in the clockwise direction with respect to the lower delimiting member 13. When the upper delimiting member 12 turns the motion-transfer member 51 and the coupling member 52 start to move and exerts torque depending on the transmission ratio onto the tilting body 61 of the regulation valve 60. Due to the force exerted on it the tilting body 61 turns around the rotation axle 62 so that in the mean time it opens the transmission passage 16 to the given extent. Then a part of the air flowing in the wind acceleration channel 11 leaves the wind acceleration channel 11 through the open part of the transmission passage 16 and so the pressure in the wind acceleration channel 11 drops as does the speed of the air flowing on.

When the rate of the air flow drops back to the permitted level, then the weight of the tilting body 61 now exerts a greater amount of torque on the tilting body 61 around the rotation axle 62 than is exerted from the compressive force of the wind through the compressive force reception member 41 and the motion-transfer member 51 of the drive part-unit 50 onto the second end 51b of the motion-transfer member 51 and so to the tilting body 61. In this way the tilting body 61 turns back to its basic position, i.e. into a plane parallel to the "FS" plane of the upper delimiting member 12, or even into the "FS" plane of the upper delimiting member 12. Naturally the same thing is realised in the case of the compressive force reception member 41 and tilting body 61 of the pressure-limiting device 40 connected to the lower delimiting member 13, only with respect to the lower delimiting member 13.

It is obvious that in the case of storm-strength gusts of wind the tilting bodies 61 of the pressure-limiting devices 40 close to the inlet opening 20 of the wind acceleration channel 11 also open, while in the case of mild wind, in a given case even the tilting body 61 covering the transmission passage 16 falling the closest to the outlet opening 30 does not open.

Therefore then it is always the wind speed in the wind acceleration channel 11 of the casing 10 of the air-flow acceleration unit 2 that determines where and when the tilting body 61 of one or more pressure-limiting devices 40 opens as a consequence of the wind force pushing effect exerted onto the compressive force reception member 41.

It is important to highlight that due to the position of the rotation axles 62 of the regulation valves 60 the tilting and tilting back of the tilting bodies 61 are realised in a much more reliable way than in the case of the known such versions where the axles of the emergency regulators are positioned perpendicular to the direction of the wind.

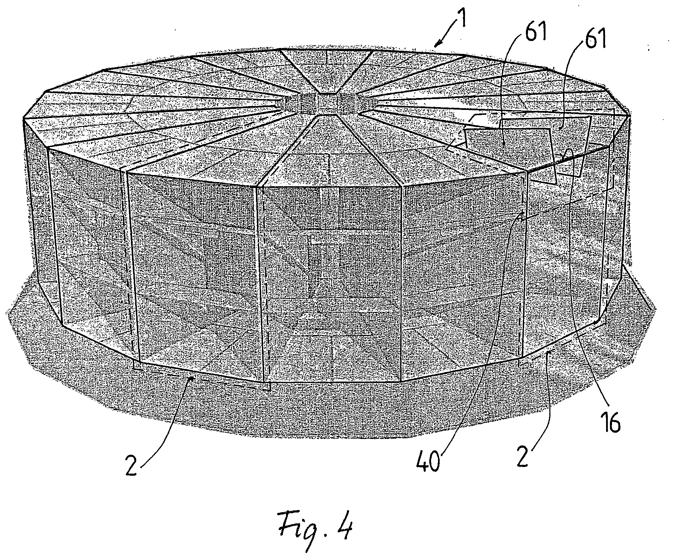

Moving over now to figure 4, it illustrates wind energy conversion equipment 1 in the case of which the air-flow acceleration units 2 are arranged in the previously mentioned cylindrical ring shape over 360°, and on the effect of the wind arriving on the right side of the wind energy conversion equipment 1 the tilting bodies 61 of the pressure-limiting device 40 covering the first transmission passage 16 of the first air-flow acceleration unit 2 are open to regulate back the greater wind pressure deriving from the wind speed.

The air-flow acceleration unit according to the invention may be used to good effect in all places where electricity has to be generated with a small amount of cost investment in a reliable way, even in significantly and suddenly changing wind conditions with an existing or new vertical axle turbine selected for the air-flow acceleration unit.

**List of references**

| | |
|---|---|
| 1 wind energy conversion equipment | |
| | |
| 2 air-flow acceleration unit | |
| | |
| 3 wind speed increasing guiding element | |
| | |
| 10 casing | 11 wind acceleration channel |
| | 12 upper delimiting member |
| | 13 lower delimiting member |
| | 14 side delimiting member |
| | 15 side delimiting member |
| | 16 transmission passage |
| | 17 main axis |
| | |
| 20 inlet opening | |
| | |
| 30 outlet opening | |
| | |
| 40 pressure-limiting device | 41 compressive force reception member |
| | 42 axle |
| | |
| 50 drive part-unit | 51 motion-transfer member |
| | 51a first end |
| | 51b second end |
| | 52 coupling member |
| | |
| 60 regulation valve | 61 tilting body |
| | 62 rotation axle |
| | |
| "AS" plane | |
| | |
| "FS" plane | |
| | |
| "HS" longitudinal plane | |
| | |
| "S" longitudinal main plane | |
| | |
| "α" angle | |

## Claims

1. Regulatable air-flow acceleration unit for wind energy conversion which has a wind acceleration channel (11) enclosed by a casing (10) with an inlet opening (20) and an outlet opening (30), where the casing (10) has an upper delimiting member (12), a lower delimiting member (13) and at least two side delimiting members (14, 15), furthermore the casing (10) is supplemented with at least two pressure-limiting devices (40), at least some of the pressure-limiting devices (40) have a regulation valve (60), the regulation valve (60) has a tilting body (61) and a rotation axle (62) connected to the tilting body (61) in such a way as to permit rotation, and the rotation axle (62) is located near to the upper delimiting member (12) of the casing (10), or near to the lower delimiting member (13) of the casing (10), or in the plane (FS) of the upper delimiting member (12) or in the plane (AS) of the lower delimiting member (13), and is connected to the casing (10) so that it may tilt in this way, furthermore, the upper delimiting member (12) or the lower delimiting member (13) of the casing (10) is supplied with a transmission passage (16) in the vicinity of the rotation axle (62), and in its basic position the tilting body (61) is inserted into the casing (10) so that it at least partially covers the transmission passage (16), while in its operation position the tilting body (61) is set to the turned out position from the plane (FS) of the upper delimiting member (12) or from the plane (AS) of the lower delimiting member (13) of the casing (10) around its own rotation axle (62), and the wind acceleration channel (11) encompassed by the casing (10) has a cross-section that monotonously reduces from the direction of the inlet opening (20) towards the outlet opening (30), **characterised in that** at least some of the pressure-limiting devices (40) have a compressive force reception member (41) protruding into the wind acceleration channel (11), and an axle (42) connected to the compressive force reception member (41) permitting rotation, and a multi-member drive part-unit (50) connected to the compressive force reception member (41) and the tilting body (61) of the regulation valve (60) is connected to the drive part-unit (50) the rotation axle (62) of tilting body (61) is at an angle (α) to the longitudinal main axis (17) of the casing (10) that is not perpendicular, the direction of the rotation axle (62) is substantially equal with the direction of wind in the wind acceleration channel (11), and the tilting body (61) is in its operation position tilted out from the plane (FS) of the upper delimiting member (12) or from the plane (AS) of the lower delimiting member (13) of the casing (10) around its own rotation axle (62) with the help of the drive part-unit (50) which is connected to the rotation of the compressive force reception member (41).

2. The regulatable air-flow acceleration unit according to claim 1, **characterised by** that the wind acceleration channel (11) encompassed by the casing (10) has a circular cylinder-ring section shape.

3. The regulatable air-flow acceleration unit according to claim 1 or 2, **characterised by** that the tilting body (61) has a size and a shape that conforms to the size and the shape of the transmission passage (16).

4. The regulatable air-flow acceleration unit according to any of claims 1-3, **characterised by** that the rotation axle (62) of the tilting body (61) of the regulation valve (60) is located in a longitudinal plane (HS) of the casing (10) that is not the longitudinal main plane (S) of the casing (10).

5. The regulatable air-flow acceleration unit according to any of claims 1-4, **characterised by** that the rotation axle (62) of the tilting body (61) of the regulation valve (60) is located parallel to the plane (FS) of the upper delimiting member (12) of the casing (10) or parallel to the plane (AS) of the lower delimiting member (13) of the casing (10).

6. The regulatable air-flow acceleration unit according to any of claims 1-5, **characterised by** that the pressure-limiting devices (40) are arranged in the casing (10) sequentially from the inlet opening (20) of the wind acceleration channel (11) towards the outlet opening (30).

7. The regulatable air-flow acceleration unit according to any of claims 1-6, **characterised by** that the pressure-limiting devices (40) are arranged in the vicinity of both the upper delimiting member (12) and the lower delimiting member (13) of the casing (10).

8. The regulatable air-flow acceleration unit according to any of claims 1-7, **characterised by** that the pressure-limiting devices (40) are arranged next to one another in the vicinity of the upper delimiting member (12) of the casing (10) and/or in the vicinity of the lower delimiting member (13) of the casing (10).

## Patentansprüche

1. Regulierbare Luftflussbeschleunigungseinheit für Windenergieumwandlung, die einen von einem Gehäuse (10) umschlossenen Windbeschleunigungskanal (11) mit einer Einlassöffnung (20) und einer Auslassöffnung (30) aufweist, wobei das Gehäuse (10) ein oberes begrenzendes Element (12), ein unteres begrenzendes Element (13) und mindestens zwei seitliche begrenzende Elemente (14, 15) aufweist, wobei das Gehäuse (10) des Weiteren mit mindestens zwei druckbegrenzenden Einrichtungen (40) versehen ist, wobei mindestens einige der druckbegrenzenden Einrichtungen (40) ein Regulierventil (60) aufweisen, wobei das Regulierventil (60) einen verschwenkbaren Körper (61) und eine mit dem verschwenkbaren Körper (61) verbundene Rotationsachse (62) derart aufweist, dass eine Rotation ermöglicht wird, wobei die Rotationsachse (62) in der Nähe des oberen begrenzenden Elements (12) des Gehäuses (10) oder in der Nähe des unteren begrenzenden Elements (13) des Gehäuses (10) oder in der Ebene (FS) des oberen begrenzenden Elements (12) oder in der Ebene (AS) des unteren begrenzenden Elements (13) angeordnet und mit dem Gehäuse (10) so verbunden ist, dass es auf diese Weise verschwenken kann, wobei des Weiteren das obere begrenzende Element (12) oder das untere begrenzende Element (13) des Gehäuses (10) in der Nähe der Rotationsachse (62) mit einem Übertragungsdurchgang (16) versehen ist, wobei der verschwenkbare Körper (61) in seiner Grundposition in das Gehäuse (10) so eingesetzt ist, dass er den Übertragungsdurchgang (16) mindestens teilweise abdeckt, während der verschwenkbare Körper (61) in seiner Betriebsposition in die von der Ebene (FS) des oberen begrenzenden Elements (12) oder von der Ebene (AS) des unteren begrenzenden Elements (13) des Gehäuses (10) um seine eigene Rotationsachse (62) nach außen gedrehte Position gebracht ist, und wobei der von dem Gehäuse (10) umgebene Windbeschleunigungskanal (11) einen Querschnitt aufweist, der sich von der Richtung der Einlassöffnung (20) zu der Auslassöffnung (30) hin monoton verringert, **dadurch gekennzeichnet, dass** mindestens einige der druckbegrenzenden Einrichtungen (40) ein Kompressionskraftaufnahmeelement (41) aufweisen, das in den Windbeschleunigungskanal (11) vorsteht, wobei eine Achse (42) mit dem Kompressionskraftaufnahmeelement (41) verbunden ist, um eine Rotation zuzulassen, und wobei eine mehrteilige Antriebsteileinheit (50) mit dem Kompressionskraftaufnahmeelement (41) verbunden ist und der verschwenkbare Körper (61) des Regulierventils (60) mit der Antriebsteileinheit (50) verbunden ist, wobei die Rotationsachse (62) des verschwenkbaren Körpers (61) einen Winkel (α) zu der längs gerichteten Hauptachse (17) des Gehäuses (10) aufweist, der nicht senkrecht ist, wobei die Richtung der Rotationsachse (62) im wesentlichen gleich der Richtung des Winds in dem Windbeschleunigungskanal (11) ist, und wobei der verschwenkbare Körper (61) in seiner Betriebsposition aus der Ebene (FS) des oberen begrenzenden Elements (12) oder aus der Ebene (AS) des unteren begrenzenden Elements (13) des Gehäuses (10) heraus um seine eigene Rotationsachse (62) mit der Hilfe der Antriebsteileinheit (50) verschwenkt ist, die mit der Rotation des Kompressionskraftaufnahmeelements (41) verbunden ist.

2. Regulierbare Luftflussbeschleunigungseinheit nach Anspruch 1, **dadurch gekennzeichnet, dass** der von dem Gehäuse (10) umgebene Windbeschleunigungskanal (11) eine kreisförmige Zylinderring-Schnittform hat.

3. Regulierbare Luftflussbeschleunigungseinheit nach Anspruch 1 oder 2, **dadurch gekennzeichnet, dass** der verschwenkbare Körper (61) eine Größe und eine Form aufweist, die zu der Größe und der Form des Übertragungsdurchgangs (16) passt.

4. Regulierbare Luftflussbeschleunigungseinheit nach einem der Ansprüche 1-3, **dadurch gekennzeichnet, dass** die Rotationsachse (62) des verschwenkbaren Körpers (61) des Regulierventils (60) in einer längs gerichteten Ebene (HS) des Gehäuses (10) angeordnet ist, die nicht die längs gerichtete Hauptebene (S) des Gehäuses (10) ist.

5. Regulierbare Luftflussbeschleunigungseinheit nach einem der Ansprüche 1-4, **dadurch gekennzeichnet, dass** die Rotationsachse (62) des verschwenkbaren Körpers (61) des Regulierventils (60) parallel zu der Ebene (FS) des oberen begrenzenden Elements (12) des Gehäuses (10) oder parallel zu der Ebene (AS) des unteren begrenzenden Elements (13) des Gehäuses (10) angeordnet ist.

6. Regulierbare Luftflussbeschleunigungseinheit nach einem der Ansprüche 1-5, **dadurch gekennzeichnet, dass** die druckbegrenzenden Einrichtungen (40) in dem Gehäuse (10) sequenziell von der Einlassöffnung (20) des Windbeschleunigungskanals (11) zu der Auslassöffnung (30) hin angeordnet sind.

7. Regulierbare Luftflussbeschleunigungseinheit nach einem der Ansprüche 1-6, **dadurch gekennzeichnet, dass** die druckbegrenzenden Einrichtungen (40) in der Nähe sowohl des oberen begrenzenden Elements (12) als auch des unteren begrenzenden Elements (13) des Gehäuses (10) angeordnet sind.

8. Regulierbare Luftflussbeschleunigungseinheit nach einem der Ansprüche 1-7, **dadurch gekennzeichnet, dass** die druckbegrenzenden Einrichtungen (40) nebeneinander in der Nähe des oberen begrenzenden Elements (12) des Gehäuses (10) und/oder in der Nähe des unteren begrenzenden Elements (13) des Gehäuses (10) angeordnet sind.

## Revendications

1. Unité d'accélération de l'écoulement de l'air pouvant être régulé pour la conversion d'énergie éolienne, qui comporte un canal d'accélération du vent (11) entouré par une enveloppe (10) ayant une ouverture d'entrée (20) et une ouverture de sortie (30), où l'enveloppe (10) comporte un élément de délimitation supérieur (12), un élément de délimitation inférieur (13) et au moins deux éléments de délimitation latéraux (14, 15), l'enveloppe (10) est en outre complétée par au moins deux dispositifs de limitation de pression (40), au moins certains des dispositifs de limitation de pression (40) comportent une soupape de régulation (60), la soupape de régulation (60) comporte un corps basculant (61) et un axe de rotation (62) raccordé au corps basculant (61) de manière à permettre une rotation, et l'axe de rotation (62) est situé à proximité de l'élément de délimitation supérieur (12) de l'enveloppe (10) ou à proximité de l'élément de délimitation inférieur (13) de l'enveloppe (10), ou dans le plan (FS) de l'élément de délimitation supérieur (12) ou dans le plan (AS) de l'élément de délimitation inférieur (13), et est raccordé à l'enveloppe (10) de telle sorte qu'il peut s'incliner de cette manière, de plus, l'élément de délimitation supérieur (12) ou l'élément de délimitation inférieur (13) de l'enveloppe (10) est doté d'un passage de transmission (16) au voisinage de l'axe de rotation (62), et dans sa position de base le corps basculant (61) est inséré dans l'enveloppe (10) de telle sorte qu'il recouvre au moins partiellement le passage de transmission (16), tandis que dans sa position de fonctionnement le corps basculant (61) est placé dans la position retournée par rapport du plan (FS) de l'élément de délimitation supérieur (12) ou par rapport au plan (AS) de l'élément de délimitation inférieur (13) de l'enveloppe (10) autour de son propre axe de rotation (62), et le canal d'accélération du vent (11) entouré par l'enveloppe (10) présente une section transversale qui diminue de façon monotone de la direction de l'ouverture d'entrée (20) vers l'ouverture de sortie (30), **caractérisée en ce que** au moins certains des dispositifs de limitation de pression (40) comportent un élément de réception de force de compression (41) faisant saillie dans le canal d'accélération du vent (11), et un axe (42) raccordé à l'élément de réception de force de compression (41) permettant la rotation, et une unité-partie d'entraînement à éléments multiples (50) raccordée à l'élément de réception de force de compression (41), et le corps basculant (61) de la soupape de régulation (60) est raccordé à l'unité-partie d'entraînement (50), l'axe de rotation (62) du corps basculant (61) forme un angle (α) avec l'axe principal longitudinal (17) de l'enveloppe (10) qui n'est pas perpendiculaire, la direction de l'axe de rotation (62) est sensiblement égale à la direction du vent dans le canal d'accélération du vent (11), et le corps basculant (61) est, dans sa position de fonctionnement, incliné par rapport au plan (FS) de l'élément de délimitation supérieur (12) ou par rapport au plan (AS) de l'élément de délimitation inférieur (13) de l'enveloppe (10) autour de son propre axe de rotation (62) à l'aide de l'unité-partie d'entraînement (50) qui est raccordée à la rotation de l'élément de réception de force de compression (41).

2. Unité d'accélération de l'écoulement de l'air pouvant être régulé selon la revendication 1, **caractérisée en ce que** le canal d'accélération du vent (11) entouré par l'enveloppe (10) a une forme de section de bague de cylindre circulaire.

3. Unité d'accélération de l'écoulement de l'air pouvant être régulé selon la revendication 1 ou 2, **caractérisée en ce que** le corps basculant (61) a une taille et une forme qui s'adaptent à la taille et à la forme du passage de transmission (16).

4. Unité d'accélération de l'écoulement de l'air pouvant être régulé selon l'une quelconque des revendications 1 à 3, **caractérisée en ce que** l'axe de rotation (62) du corps basculant (61) de la soupape de régulation (60) est situé dans un plan longitudinal (HS) de l'enveloppe (10) qui n'est pas le plan principal longitudinal (S) de l'enveloppe (10).

5. Unité d'accélération de l'écoulement de l'air pouvant être régulé selon l'une quelconque des revendications 1 à 4, **caractérisée en ce que** l'axe de rotation (62) du corps basculant (61) de la soupape de régulation (60) est situé de manière parallèle au plan (FS) de l'élément de délimitation supérieur (12) de l'enveloppe (10) ou parallèle au plan (AS) de l'élément de délimitation inférieur (13) de l'enveloppe (10).

6. Unité d'accélération de l'écoulement de l'air pouvant être régulé selon l'une quelconque des revendications 1 à 5, **caractérisée en ce que** les dispositifs de limitation de pression (40) sont agencés dans l'enveloppe (10) de manière séquentielle, de l'ouverture d'entrée (20) du canal d'accélération du vent (11) vers l'ouverture de sortie (30).

7. Unité d'accélération de l'écoulement de l'air pouvant être régulé selon l'une quelconque des revendications 1 à 6, **caractérisée en ce que** les dispositifs de limitation de pression (40) sont agencés au voisinage à la fois de l'élément de délimitation supérieur (12) et de l'élément de délimitation inférieur (13) de l'enveloppe (10).

8. Unité d'accélération de l'écoulement de l'air pouvant être régulé selon l'une quelconque des revendications 1 à 7, **caractérisée en ce que** les dispositifs de limitation de pression (40) sont agencés les uns à côté des autres au voisinage de l'élément de délimitation supérieur (12) de l'enveloppe (10) et/ou au voisinage de l'élément de délimitation inférieur (13) de l'enveloppe (10).
